# EUROPEAN PATENT APPLICATION

(11) **EP 4 560 373 A1**
(43) Date of publication of application: **28.05.2025**
(21) Application number: 24211709.1
(22) Date of filing: 08.11.2024
(51) Int. Cl.: G02B 7/04, G02B 7/06, G02B 7/12, G02B 7/18, G02B 23/00, G02B 7/08, G02B 23/18

(54) **MONOCULAR HANDHELD DEVICE AND OBJECTIVE LENS ASSEMBLY**

(30) Priority: 22.11.2023 CN 202323196562 U; 30.04.2024 CN 202410542310; 30.04.2024 CN 202420944539 U; 30.04.2024 CN 202420944560 U
(71) Applicant: Infiray Technologies Co., Ltd., Hefei, Anhui 230001 (CN)
(72) Inventor: HAN, Rong, Hefei, Anhui 230001 (CN); ZHANG, Yong, Hefei, Anhui 230001 (CN)
(74) Representative: Biallo, Dario

(57) **Abstract**

A monocular handheld device and an objective lens assembly are provided. The objective lens assembly includes a first lens, a second lens, a first focusing ring and a second focusing ring. Optical axes of the first and second lenses are parallel, and the first and second lenses are movable forward and backward along the respective optical axis. The first focusing ring and the second focusing ring are coaxial and sleeved outside the first lens and the second lens in sequence along an axial direction, and the first focusing ring and the second focusing ring are rotatable around the axial direction. The first lens is driven to move forward and backward through rotation of the first focusing ring, to focus the first lens independently. The second lens is driven to move forward and backward through rotation of the second focusing ring, to focus the second lens independently.

## Description

### FIELD

The present application relates to the technical field of imaging equipment, and in particular to a monocular handheld device and an objective lens assembly.

### BACKGROUND

In the field of outdoor sports and outdoor observation, infrared thermal imaging technology can help users quickly identify and find the target with its unique principle. However, since the infrared thermal imaging technology relies on temperature difference, in scenarios where the temperature difference of the target is not large, the contrast of infrared thermal imaging is low and its ability to distinguish details is poor. Starlight night vision technology can realize clear imaging in a low-light environment with only starlight, which is conducive to identification and investigation of detailed scenarios and environments. Moreover, the large array of low-light detectors can make up for the too short infrared recognition distance. Under outdoor conditions, the combination of infrared thermal imaging and starlight night vision will have obvious advantages in terms of image quality, adaptability and visual field.

The multi-light fusion monocular handheld devices in the market mostly adopt a triangular arrangement for the lenses, leading to an uncoordinated overall appearance and a poor hand grip feeling. Moreover, infrared lenses and the visible light lenses of most of the handheld devices need to extend out of the lens barrel structure of the whole device when in use. When focusing, the lens needs to be griped by the fingers and then rotated, which is inconvenient to operate, and if the user wears gloves outdoors in winter, focusing becomes even more difficult. Moreover, due to the limitation of the overall structural size, the two lenses are very close to each other, making many monocular handheld devices usually only have one lens adjustable for focusing, thus greatly limiting the usage scenarios.

In summary, a technical problem to be addressed by those skilled in the art is that the usage scenarios of multi-light devices are limited.

### SUMMARY

In view of this, an object of the present application is to provide a monocular handheld device and an objective lens assembly. The structural design of the monocular handheld device and the objective lens assembly can effectively solve the problem of limited usage scenarios of multi-light devices.

In order to achieve the above object, the following technical solutions are provided according to the present application.

An objective lens assembly includes a first lens, a second lens, a first focusing ring and a second focusing ring, where an optical axis of the first lens and an optical axis of the second lens are parallel to each other, and the first lens and the second lens are able to move forward and backward along the respective optical axis; the first focusing ring and the second focusing ring are coaxial and are sleeved outside the first lens and the second lens in sequence along an axial direction, and the first focusing ring and the second focusing ring are able to rotate around the axial direction respectively; the first focusing ring is configured to rotate around the axial direction to drive the first lens to move forward and backward, to realize independent focusing of the first lens; and the second focusing ring is configured to rotate around the axial direction to drive the second lens to move forward and backward, to realize independent focusing of the second lens.

In an embodiment, the first focusing ring is threadedly connected to the first lens, so that when the first focusing ring rotates around the axial direction, the first lens is driven to move forward and backward; and the second focusing ring is threadedly connected to the second lens, so that when the second focusing ring rotates around the axial direction, the second lens is driven to move forward and backward.

In an embodiment, the first focusing ring is sleeved outside the first lens and the second lens, an outer wall of the first lens is provided with a first external thread, and an inner wall of the first focusing ring is provided with a first internal thread engaged with the first external thread; and/or
the second focusing ring is sleeved outside the first lens and the second lens, an outer wall of the second lens is provided with a second external thread, and an inner wall of the second focusing ring is provided with a second internal thread engaged with the second external thread.

In an embodiment, one of an outer wall of the first lens and an inner wall of the first focusing ring is provided with a first slide groove, the other is provided with a first protrusion fitted with the first slide groove, and the first protrusion is configured to move along the first slide groove when the first focusing ring rotates around the axial direction, to drive the first lens to move forward and backward; and/or
one of an outer wall of the second lens and an inner wall of the second focusing ring is provided with a second slide groove, the other is provided with a second protrusion fitted with the second slide groove, and the second protrusion is configured to move along the second slide groove when the second focusing ring rotates around the axial direction, to drive the second lens to move forward and backward.

In an embodiment, in a case that the first slide groove and the first protrusion are provided, the outer wall of the first lens is provided with a first boss, an outer peripheral surface of the first boss is coaxial with the inner wall of the first focusing ring, and the first slide groove is provided in the outer peripheral surface of the first boss; and
in a case that the second slide groove and the second protrusion are provided, the outer wall of the second lens is provided with a second boss, an outer peripheral surface of the second boss is coaxial with the inner wall of the second focusing ring, and the second slide groove is provided in the outer peripheral surface of the second boss.

In an embodiment, in a case that the first boss is provided, the outer peripheral surface of the first boss is further provided with a first avoidance groove extending along the axial direction, where the first avoidance groove has one end being communicated with the first slide groove and the other end extending to an edge of the first boss, so that the first protrusion can be inserted into the first slide groove via the first avoidance groove; and
in a case that the second boss is provided, the outer peripheral surface of the second boss is further provided with a second avoidance groove extending along the axial direction, where the second avoidance groove has one end being communicated with the second slide groove and the other end extending to an edge of the second boss, so that the second protrusion can be inserted into the second slide groove via the second avoidance groove.

In an embodiment, the objective lens assembly further includes a supporting main body, where the first lens and the second lens are arranged on the supporting main body and are movable forward and backward along their respective optical axis, the first focusing ring and the second focusing ring are sleeved on an outer periphery of the supporting main body in sequence along the axial direction, and the first focusing ring and the second focusing ring are rotatable relative to the supporting main body respectively and are restricted from axial movement by the supporting main body.

In an embodiment, the objective lens assembly further includes a fill light arranged on the supporting main body.

In an embodiment, an outer peripheral surface of the first focusing ring and an outer peripheral surface of the second focusing ring are each provided with an anti-slip soft rubber pad.

In an embodiment, the first lens is an infrared lens and the second lens is a low-light lens; or, the first lens is a low-light lens, and the second lens is an infrared lens.

In an embodiment, the supporting main body includes a front flange, an intermediate member and a rear flange arranged in the listed sequence along the axial direction, the first focusing ring and the second focusing ring are rotatably connected to a front end and a rear end of the intermediate member, respectively, the first focusing ring is sandwiched between the front flange and the intermediate member to be axially limited, and the second focusing ring is sandwiched between the rear flange and the intermediate member to be axially limited.

In an embodiment, a rear end face of the front flange faces a front end edge of the first lens and a front end edge of the second lens, and a front end face of the rear flange faces a rear end edge of the first lens and a rear end edge of the second lens, so that the first lens can abut against the front flange or the rear flange during its axial movement, to be axially limited, and the second lens can abut against the front flange or the rear flange during its axial movement, to be axially limited.

In an embodiment, the first lens and the second lens are both arranged on the rear flange.

In order to achieve the above object, a monocular handheld device is further provided according to the present application, which includes the objective lens assembly according to any one of the above solutions. The monocular handheld device with the objective lens assembly should have all the technical effects of the objective lens assembly.

In an embodiment, the monocular handheld device further includes a body assembly and an eyepiece assembly, where the eyepiece assembly is arranged at a rear end of the body assembly, and the objective lens assembly is arranged at a front end of the body assembly. Further, the supporting main body is arranged on the body assembly.

In the objective lens assembly and the monocular handheld device provided by the present application, the first lens and the second lens can be separately driven to move forward and backward by screwing the first focusing ring and the second focusing ring respectively, to change distances between the lens surfaces of the first lens and the second lens and the target surfaces of the corresponding detectors respectively, so as to realizing clear imaging. That is, the objective lens assembly can realize individual focal length adjustment of each of the both lens. Furthermore, the rotation axes of the first focusing ring and the second focusing ring are coaxial, allowing a simple and compact structure as well as convenient operation for the user, which is beneficial to quick focusing of the first lens and the second lens, and thereby improving the user experience. Moreover, the first focusing ring and the second focusing ring are arranged in sequence along the axial direction in a side by side manner, which avoids movement interference, makes the overall structure be compact, thus facilitating assembly. In addition, sizes of the first focusing ring and the second focusing ring are larger than an outer diameter of a single lens, and thus the grip area is large, making the grip feeling more comfortable during focusing.

### BRIEF DESCRIPTION OF THE DRAWINGS

For more clearly illustrating embodiments of the present application or technical solutions in the conventional technology, the drawings referred to for describing the embodiments or the conventional technology will be briefly described hereinafter. Apparently, the drawings in the following description are only some examples of the present application, and for those skilled in the art, other drawings may be obtained based on the provided drawing without any creative efforts.
FIG. 1 is a schematic view showing the structure of an objective lens assembly, which is a front perspective view;
FIG 2 is a schematic view of FIG. 1 from another perspective, which is a rear perspective view;
FIG. 3 is a schematic exploded view of FIG. 1;
FIG. 4 is a schematic cross-sectional view of FIG. 1;
FIG. 5 is a schematic view showing the structure of a first focusing ring according to an embodiment of the present application;
FIG 6 is a schematic view showing the structure of a first lens according to an embodiment of the present application;
FIG. 7 is a schematic view showing the structure of a second lens;
FIG. 8 is a schematic view showing a first focusing ring and a first lens fitted to each other according to another embodiment of the present application;
FIG. 9 is a schematic view showing the structure of the first focusing ring according to the another embodiment of the present application;
FIG. 10 is a schematic view showing the structure of the first lens according to the another embodiment of the present application;
FIG. 11 is a schematic view showing a mounting manner of a fill light;
FIG. 12 is a schematic view showing the structure of the fill light;
FIG. 13 is a schematic cross-section view of the fill light;
FIG. 14 is a schematic view showing the fill light and the second lens are fitted to the second focusing ring;
FIG. 15 is a schematic view showing the structure of a monocular handheld device according to a specific embodiment of the present application;
FIG. 16 is a schematic view of FIG. 15 from another perspective;
FIG. 17 is a schematic view showing an internal of a body assembly (with a housing being removed); and
FIG. 18 is a schematic exploded view showing the structure of a supporting main body.

**Reference numerals:**

| | | | |
|---|---|---|---|
| 100 | body assembly; | 200 | eyepiece assembly, |
| 300 | objective lens assembly, | 110 | housing, |
| 120 | bracket, | 130 | heat dissipation component, |
| 140 | battery compartment, | 150 | universal 1/4 port, |
| 160 | on/off button, | 170 | camera button, |
| 180 | rotary encoder assembly | 310 | supporting main body, |
| 311 | front flange, | 312 | rear flange, |
| 313 | intermediate member, | 320 | first lens, |
| 321 | first external thread, | 322 | first slide groove, |
| 323 | first boss, | 324 | first avoidance groove, |
| 330 | second lens, | 331 | second external thread, |
| 340 | first focusing ring, | 341 | first internal thread, |
| 342 | first protrusion, | 350 | second focusing ring, |
| 360 | fill light, | 361 | fill light housing, |
| 362 | fill light adjuster, | 363 | light body, |
| 364 | lens, | 365 | base plate, |
| 370 | infrared detection position, | 380 | low-light detection position, |
| 390 | flexible protection ring. | | |

### DETAILED DESCRIPTION OF THE EMBODIMENTS

The technical solutions according to the embodiments of the present application will be described clearly and completely as follows in conjunction with the drawings in the embodiments of the present application. It is apparent that the described embodiments are only some of the embodiments according to the present application, rather than all the embodiments. All other embodiments obtained by those skilled in the art based on the embodiments of the present application without any creative work fall within the protection scope of the present application.

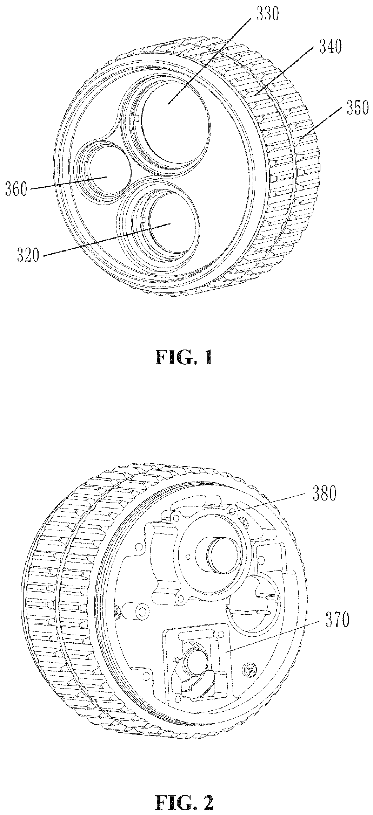

In an embodiment, with reference to FIG. 1 to FIG. 4, an objective lens assembly 300 provided according to the present application includes a first lens 320, a second lens 330, a first focusing ring 340 and a second focusing ring 350. An optical axis of the first lens 320 and an optical axis of the second lens 330 are parallel to each other, and the first lens 320 and the second lens 330 can move forward and backward along the corresponding optical axes respectively, to change distances from a lens surface of the first lens 320 and a lens surface of the second lens 330 to target surfaces of corresponding detectors respectively, so as to realize focal length adjustment for clear imaging. The first lens 320 and the second lens 330 can realize multi-light fusion, including but not limited to a combination of an infrared lens and a low-light lens, such as an infrared lens and a starlight night vision lens. The first focusing ring 340 and the second focusing ring 350 are coaxial and are sleeved outside the first lens 320 and the second lens 330 in sequence along an axial direction, and the first focusing ring 340 and the second focusing ring 350 can rotate around the axial direction separately. It should be noted that, the first focusing ring 340 and the second focusing ring 350 may be of a closed ring shape or, the first focusing ring 340 and the second focusing ring 350 may be of a partial ring shape, that is, an unclosed structure. When the first focusing ring 340 rotates around the axial direction, it can drive the first lens 320 to move forward and backward, so as to change the distance between the lens surface of the first lens 320 and the target surface of the corresponding detector, to realize the independent focusing of the first lens 320. When the second focusing ring 350 rotates around the axial direction, it can drive the second lens 330 to move forward and backward, so as to change the distance between the lens surface of the second lens 330 and the target surface of the corresponding detector, to realize the independent focusing of the second lens 330. The detector may be a sensor in particular. For example, when the first lens 320 and the second lens 330 are the infrared lens and the low-light lens respectively, the detector corresponding to the first lens 320 may be an infrared sensor, and the detector corresponding to the second lens 330 may be a low-light sensor.

The conventional objective lens assembly is limited by the size of the overall structural and only capable of focusing of a single lens, which greatly limits use scenarios. The first lens 320 and the second lens 330 of the objective lens assembly according to the present application can realize independent focusing. In the case that the first lens 320 and the second lens 330 are of different types, synchronous focusing cannot achieve clear imaging for both lenses simultaneously because of the difference in their imaging principles. Compared with synchronous focusing of the two lenses, independent focusing has broader applicability in the field of multi-light fusion. In addition, rotation axes of the first focusing ring 340 and the second focusing ring 350 are coaxial, which facilitates the arrangement.

In the objective lens assembly 300 according to the present application, the first lens 320 can be driven to move forward and backward by screwing the first focusing ring 340, to change the distance between the lens surface of the first lens 320 and the target surface of the corresponding detector, and the second lens 330 can be driven to move forward and backward by screwing the second focusing ring 350, to change the distance between the lens surface of the second lens 330 and the target surface of the corresponding detector, so that clear imaging can be achieved. That is, the objective lens assembly 300 can realize individual focal length adjustment of each of the both lens. The rotation axes of the first focusing ring 340 and the second focusing ring 350 are coaxial with each other, allowing a simple and compact structure as well as convenient operation for the user, which is beneficial to quick focusing of the first lens 320 and the second lens 330, and thereby improving the user experience. Moreover, the first focusing ring 340 and the second focusing ring 350 are arranged in sequence along the axial direction in a side by side manner, which avoids movement interference, makes the overall structure be compact, thus facilitating assembly. In addition, sizes of the first focusing ring 340 and the second focusing ring 350 are larger than an outer diameter of a single lens, and thus the grip area is large, making the grip feeling more comfortable during focusing.

In some embodiments, the first focusing ring 340 is threadedly connected with the first lens 320, and the rotation of the first focusing ring 340 is converted into a linear movement of the first lens 320 through threaded fit, so as to realize the focal length adjustment. The second focusing ring 350 is threadedly connected with the second lens 330, and the rotation of the second focusing ring 350 is converted into a linear movement of the second lens 330 through threaded fit, so as to realize the focal length adjustment. It should be understood that the first lens 320 and the second lens 330 are able to move in the axial direction, while they are restricted from rotation around their respective axes, so that the rotations of the first focusing ring 340 and the second focusing ring 350 can be converted into axial movement of the first lens 320 and the second lens 330 through threaded fit. With the threaded fit, the adjustment precision is high, the assembly is convenient and the structure is simple and compact.

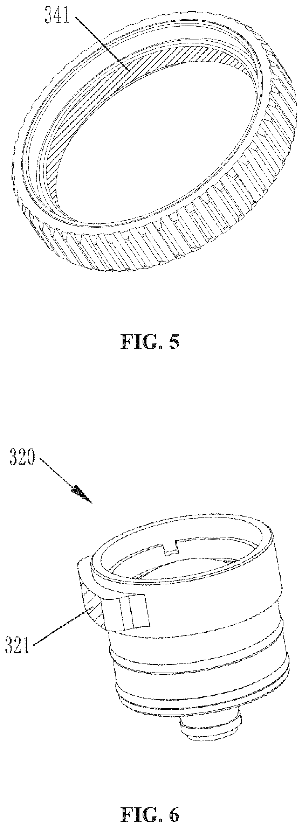

In some embodiments, with reference to FIG. 5 and FIG. 6, the first focusing ring 340 is sleeved outside the first lens 320 and the second lens 330. An outer wall of the first lens 320 is provided with a first external thread 321, and an inner wall of the first focusing ring 340 is provided with a first internal thread 341 engaged with the first external thread 321. The first focusing ring 340 adopts a ring-shaped structure, and the first lens 320 and the second lens 330 are arranged in the ring to facilitate the operation of the first focusing ring 340. The first lens 320 is provided with the first external thread 321, and the first focusing ring 340 is provided with the first internal thread 341, which is simple in structure, convenient to assemble and reliable in transmission. With the above arrangement, the size of the first focusing ring is significantly larger than the outer diameter of a single lens (the first lens or the second lens), so that the grip area is large, and the grip feel is more comfortable during focusing. It can be understood that a thread length of the first external thread 321 on the first lens 320 is set according to a thread pitch and a focusing range, that is, a travel of the first lens 320, and usually a short length of thread is enough. In other embodiments, the first lens 320 may further be provided with an annular groove with an external thread provided in the annular groove, and at least part of the first focusing ring 340 is provided with an internal thread and is inserted into the annular groove, so that the threaded fit can be realized.

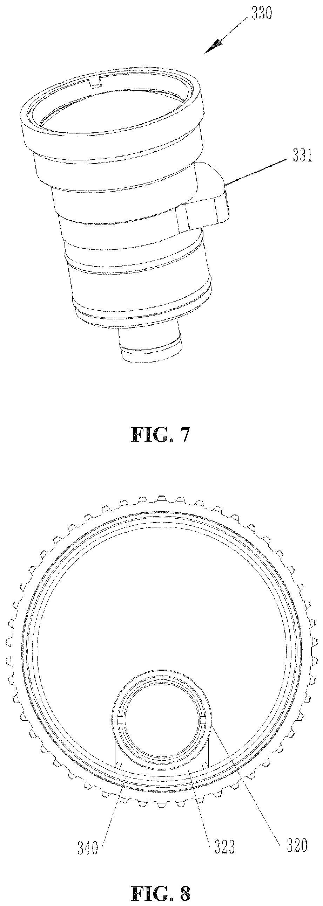

In some embodiments, with reference to FIG. 7, the second focusing ring 350 is sleeved outside the first lens 320 and the second lens 330. An outer wall of the second lens 330 is provided with a second external thread 331, and an inner wall of the second focusing ring 350 is provided with a second internal thread engaged with the second external thread 331. The fit between the second focusing ring 350 and the second lens 330 may be the same as that between the first focusing ring 340 and the first lens 320, and will not be repeated here.

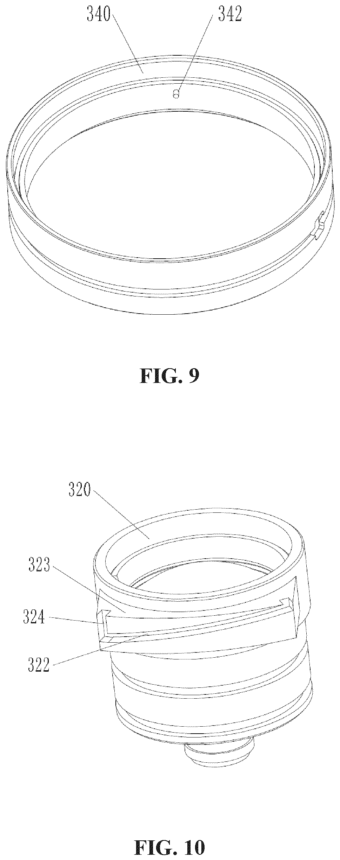

In some embodiments, with reference to FIG. 8 to FIG. 10, the first focusing ring 340 is sleeved outside the first lens 320 and the second lens 330. One of the outer wall of the first lens 320 and the inner wall of the first focusing ring 340 is provided with a first slide groove 322, and the other is provided with a first protrusion 342 fitted with the first slide groove 322. The difference between this embodiment and the threaded fit between the first focusing ring 340 and the first lens 320 is that in this embodiment, one of the fitting surfaces of the first focusing ring and the first lens 320 is provided with the first slide groove 322, and the other is provided with the first protrusion 342. It can be understood that the first lens 320 is able to move in the axial direction, and it is prevented from rotating around its own axis, so that the rotation of the first focusing ring 340 can be converted into the axial movement of the first lens 320 through the cooperation between the first slide groove 322 and the first protrusion 342. When the first focusing ring 340 rotates, the first slide groove 322 cooperates with the first protrusion 342 to drive the first lens 320 to move axially. For the above cooperation between the first slide groove 322 and the first protrusion 342, only small parts of housing structures of the first focusing ring 340 and the first lens 320 needed to be changed, which is convenient for processing. Specifically, an outer peripheral surface of the first lens 320 is provided with the first slide groove 322, and the inner wall of the first focusing ring 340 is provided with the first protrusion 342, and the first slide groove 322 extends in a spiral direction. When the first focusing ring 340 rotates, since it is prevented from axial displacement, the first protrusion 342 moves on a specific plane perpendicular to the axial direction, and when the first protrusion 342 moves in the first slide groove 322, the first lens 320 is driven to move forward and backward, thus realizing focusing.

In some embodiments, the second focusing ring 350 is sleeved outside the first lens 320 and the second lens 330, and one of the outer wall of the second lens 330 and the inner wall of the second focusing ring 350 is provided with a second slide groove, and the other is provided with a second protrusion in cooperation with the second slide groove. The cooperation between the second focusing ring 350 and the second lens 330 may be the same as that between the first focusing ring 340 and the first lens 320, and will not be repeated here.

In some embodiments, the outer wall of the first lens 320 is provided with a first boss 323, an outer peripheral surface of which is coaxial with the inner wall of the first focusing ring 340, and the first slide groove 322 is provided on the outer peripheral surface of the first boss 323. By providing the first boss 323, of which the outer peripheral surface is coaxial with the inner peripheral surface of the first focusing ring 340, the first lens 320 is arranged eccentrically with respect to the first focusing ring 340, and the outer peripheral surface of the first boss 323 and the first lens 320 are non-coaxial, so that the cooperation between the outer peripheral surface of the first boss 323 and the inner peripheral surface of the first focusing ring 340 is able to limit the rotation of the first lens 320, that is, due to the cooperation between the outer peripheral surface of the first boss 323 and the inner peripheral surface of the first focusing ring 340, the first lens 320 is prevented from rotating around its own axis, and the first lens 320 is able to move forward and backward only along the axis. The above arrangement not only realizes circumferential limitation through the first boss 323, but also facilitates providing the first slide groove 322, leading to simple structure and reliable transmission.

In some embodiments, the outer wall of the second lens 330 is provided with a second boss, an outer peripheral surface of which is coaxial with the inner wall surface of the second focusing ring, and the second slide groove is provided on the outer peripheral surface of the second boss. The specific arrangement and function of the second boss are the same as those of the first boss 323, which will not be repeated here.

In some embodiments, the outer peripheral surface of the first boss 323 is further provided with a first avoidance groove 342 extending in the axial direction, where the first avoidance groove 342 has one end being communicated with the first slide groove 322 and the other end extending to an edge of the first boss 323, so that the first protrusion 342 can be inserted into the first slide groove 322 via the first avoidance groove 342. With the first avoidance groove 342, when the first lens 320 and the first focusing ring 340 are mounted, that is, when they move axially toward each other for assembly, the first protrusion 342 enters the first avoidance groove 342 from one end of the first avoidance groove 342 and moves axially along the first avoidance groove 342 to enter the first slide groove 322, and thus the first focusing ring 340 rotate relative to the first lens 320 to drive the first lens 320 to move axially. With the above arrangement, the structure is simple and the assembly is easy. In other embodiments, the first protrusion 342 may also be provided as a retractable protrusion. For example, the first protrusion 342 may be arranged on the inner wall of the first focusing ring 340 in an axially slidable manner, an elastic member is provided between the first protrusion 342 and the inner wall of the first focusing ring 340. The first protrusion 342 is retracted in assembling, and when the first protrusion 342 faces the first slide groove 322 during assembly, the first protrusion 342 extends outward under the action of the elastic member to cooperate with the first slide groove 322.

Further, the outer peripheral surface of the second boss is also provided with a second avoidance groove extending along the axial direction, the second boss has one end being communicated with the second slide groove and the other end extending to the edge of the second boss, so that the second protrusion can be inserted into the second slide groove via the second avoidance groove. The cooperation between the second protrusion and the second slide groove may be the same as that between the first protrusion 342 and the first slide groove 322, which will not be repeated here.

In some embodiments, the first boss 323 is in clearance fit with the first focusing ring 340, and the second boss is in clearance fit with the second focusing ring. The clearance fit reduces the friction between the first boss 323 and the first focusing ring when they move relative to each other, and the friction between the second boss and the second focusing ring when they move relative to each other, which not only facilitates the focus adjustment operation but also reduces the wear caused by friction.

In some embodiments, the first focusing ring 340 and the second focusing ring 350 are both coaxially arranged with an eyepiece assembly 200 of the device having the objective lens assembly 300. This arrangement facilitates the arrangement of the first focusing ring 340 and the second focusing ring 350 on the body assembly 100, and the first focusing ring 340 and the second focusing ring 350 are coaxial with the eyepiece assembly 200 and are arranged in sequence in the axial direction, which facilitates the operation of the user, for example, the user is able to screw the first focusing ring 340 and the second focusing ring 350 from a same side of the monocular handheld device. Specifically, a distance between the first focusing ring 340 and the second focusing ring 350 is smaller than or equal to a preset distance. The first focusing ring 340 and the second focusing ring 350 are arranged close to each other, which is convenient for the user to quickly perform the screwing operation of them, and thereby improving the convenience of operation.

In some embodiments, the outer peripheral surface of the first focusing ring 340 and the outer peripheral surface of the second focusing ring 350 are each provided with an anti-slip soft rubber pad. By providing the anti-slip soft rubber pad, the friction force during screwing is increased, so that the user can have clear feeling of focusing even when wearing gloves, which improves the user experience. The anti-slip soft rubber pad may be made of silicone, rubber or the like.

In some embodiments, the objective lens assembly 300 further includes a supporting main body 310 for mounting the first lens 320, the second lens 330, the first focusing ring 340 and the second focusing ring 350, and the specific structure thereof is set according to the mounting demands. Specifically, the first lens 320 and the second lens 330 are arranged on the supporting main body 310 in a manner that the first lens 320 and the second lens 330 are movable (for example, slidable) forward and backward along their optical axes respectively, and the first focusing ring 340 and the second focusing ring 350 are sleeved on the outer periphery of the supporting main body 310 in sequence in the axial direction. The first focusing ring 340 and the second focusing ring 350 are arranged on the supporting main body 310 in a rotatable manner and are restricted from moving axially by the supporting main body 310, that is, the first focusing ring 340 and the second focusing ring 350 are rotatable relative to the supporting main body 310, that is, both of the first focusing ring 340 and the second focusing ring 350 are rotatable relative to the supporting main body 310, but cannot move axially. It should be noted that the rotation axis of the first focusing ring 340 refers to the axis around which the first focusing ring 340 rotates relative to the supporting main body 310, and similarly, the rotation axis of the second focusing ring 350 refers to the axis around which the second focusing ring 350 rotates relative to the supporting main body 310. The supporting main body 310 facilitates the mounting of the above components. All of the components can be integrated into a whole to facilitate the assembly of the objective lens assembly 300 with other devices, which further facilitate the assembly of the monocular handheld device.

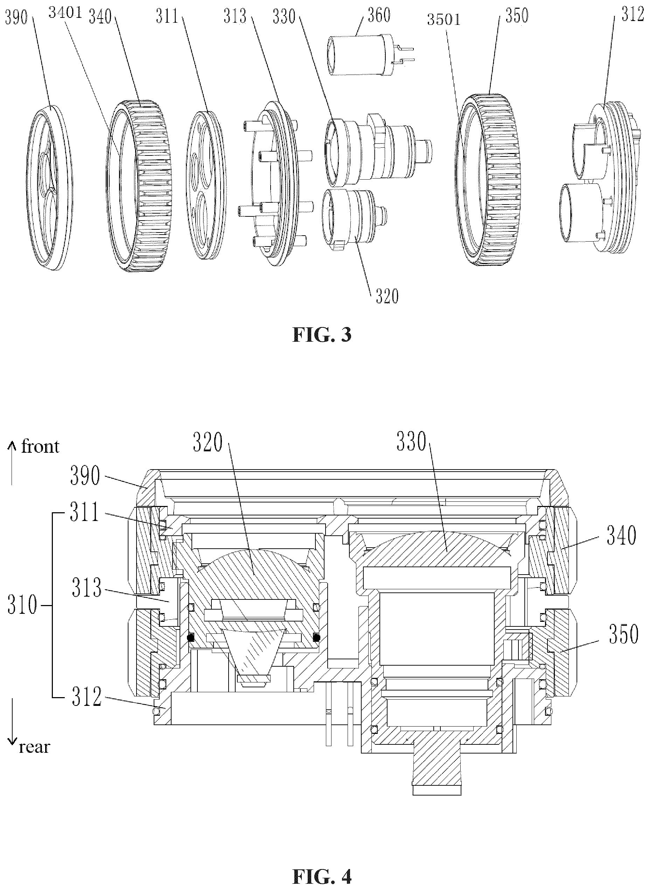

In some embodiments, with reference to FIG. 3 and FIG. 4, the supporting main body 310 includes a front flange 311, an intermediate member 313 and a rear flange 312 which are arranged in the listed sequence along the axial direction. The first focusing ring 340 and a second focusing ring 350 are rotatably connected with a front end and a rear end of the intermediate member 313, respectively, and the first focusing ring 340 is sandwiched between the front flange 311 and the intermediate member 313 to be axially limited, and the second focusing ring 350 is sandwiched between the rear flange 312 and the intermediate member 312 to be axially limited. The first lens 320 and the second lens 330 are both arranged at the rear flange 312. The rear flange 312 is arranged at the body assembly 100, specifically, the rear flange 312 is detachably connected to the body assembly 100, such as by screws. The above arrangement facilitates not only supporting but also assembly and disassembly. Specifically, the front flange 311 and the rear flange 312 may also be detachably connected to the intermediate member 313 respectively, such as by screws. Through the connection between the front flange 311 and the intermediate member 313, the first focusing ring 340 is rotatably sandwiched between the front flange 311 and the intermediate member 313, to be limited axially and prevented from moving axially. Of course, this axial limiting should not affect the rotation of the first focusing ring 340. Similarly, through the connection between the rear flange 312 and the intermediate member 313, the second focusing ring 350 is rotatably sandwiched between the rear flange 312 and the intermediate member 313, to be limited axially and prevented from moving axially. Of course, this axial limiting should not affect the rotation of the second focusing ring 350. In this way, the first focusing ring 340 and the second focusing ring 350 can be separated by the intermediate member 313, the first lens 320 is driven to move forward and backward by screwing the first focusing ring 340, and the second lens 330 is driven to move forward and backward by screwing the second focusing ring 350, so that the focusing of the first lens 320 and the focusing of the second lens 330 can be carried out independently without interference. Moreover, there is no need to provide a rotation connection structure for the first focusing ring 340 and the second focusing ring 350, which simplifies the structure and facilitates the assembly. In addition, the first lens 320 and the second lens 330 are mounted on the same structural member, that is, the rear flange 312, which avoids nonparallel optical axes due to mounting and debugging, and thus improves the dual-light fusion effect of the product. In other embodiments, the supporting main body 310 may have a housing, which is provided with mounting grooves corresponding to the first focusing ring 340 and the second focusing ring 350 are respectively, and the first focusing ring 340 and the second focusing ring 350 are rotatably mounted in the mounting grooves respectively.

In some other embodiments, the front flange 311 and the rear flange 312 are not directly connected to the intermediate member 313, instead, they are indirectly connected to the intermediate member 313 through the first focusing ring 340 and the second focusing ring 350, respectively. Specifically, a front end and a rear end of the first focusing ring 340 are rotatably connected to the front flange 311 and the intermediate member 313, respectively, and the first focusing ring 340 is restricted from moving forward and backward in the axial direction by the front flange 311 and the intermediate member 313. A front end and a rear end of the second focusing ring 350 are rotatably connected to the intermediate member 313 and the rear flange 312, respectively, and the second focusing ring 350 is restricted from moving forward and backward in the axial direction by the intermediate member 313 and the rear flange 312. With the above arrangement, the intermediate member 313 does not need to be directly connected to the front flange 311 and the rear flange 312, which simplifies the internal structure.

In some embodiments, the front flange 311 are connected to the intermediate member 313 by fasteners such as screws, and the rear flange 312 are connected to the intermediate member 313 by fasteners such as screws. The first focusing ring 340 is directly connected to the front flange 311 or the intermediate member 313 in a rotatable manner, and the second focusing ring 350 is directly connected to the rear flange 312 or the intermediate member 313 in a rotatable manner.

In some embodiments, a rear end face of the front flange 311 (that is, the end face of the front flange 311 facing the intermediate member 313) faces a front end edge of the first lens 320 and a front end edge of the second lens 330, and a front end face of the rear flange 312 (that is, the end face of the rear flange 312 facing the intermediate member 313) faces a rear end edge of the first lens 320 and a rear end edge of the second lens 330, so that the first lens 320 can abut against the front flange 311 or the rear flange 312 during axial movement, to be axially limited, and the second lens 330 can abut against the front flange 311 or the rear flange 312 during axial movement, to be axially limited. In this way, when the first lens 320 is driven to move axially by screwing the first focusing ring 340, and moves forward or backward to abut against the front flange 311 or the rear flange 312, further axial movement in the moving direction is restricted. Similarly, when the second lens 330 is driven to move axially by screwing the second focusing ring 350, and moves forward or backward to abut against the front flange 311 or the rear flange 312, further axial movement in the moving direction is restricted. With the above arrangement, the front flange 311 and the rear flange 312 can serve as limiting structures for restricting the axial movement of the first lens 320 and the second lens 330, to control the moving displacement of the first lens 320 and the second lens 330, thus improving the safety of the device. Moreover, the front flange 311 and the rear flange 312 integrate multiple functions, further simplifying the structure. Specifically, at least one of the front flange 311 and the rear flange 312 is provided with a stepped face for abutting against the steps respectively provided on the first lens 320 and the second lens 330 to limit the position. In other embodiments, limiting of the moving displacement may also be achieved by the thread lengths of the first lens 320 and the second lens 330.

In some embodiments, the rear flange 312 is provided with a first mounting position and a second mounting position for mounting the first lens 320 and the second lens 330 respectively, and the side wall of the first mounting position may be provided with an avoidance portion at a position corresponding to the first focusing ring 340, so that the first focusing ring 340 and the first lens 320 can be in contact and in threaded fit with each other. Correspondingly, the side wall of the second mounting position may be provided with an avoidance portion at a position corresponding to the second focusing ring 350, so that the second focusing ring 350 and the second lens 330 can be in contact and in threaded fit with each other.

In some embodiments, the first mounting position includes a first protruding ring 3121 provided on the end face of the rear flange 312 facing the intermediate member 313, and the first lens 320 is mounted in the first protruding ring 3121. The second mounting position includes a second protruding ring 3122 provided on the end face of the rear flange 312 facing the intermediate member 313, and the second lens 330 is mounted in the second protruding ring 3122. The side walls of the first protruding ring 3121 and the second protruding ring 3122 are each provided with an opening to form the avoidance portion. Each of the intermediate member 313 and the front flange 311 is provided with through holes corresponding to the first protruding ring 3121 and the second protruding ring 3122, and the first protruding ring 3121 and the second protruding ring 3122 respectively pass through the corresponding through holes. By providing the first protruding ring 3121 and the second protruding ring 3122 on the rear flange 312, the first lens 320 can move forward and backward along the first protruding ring 3121 and the second lens 330 can move forward and backward along the second protruding ring 3122, and the first protruding ring 3121 and the second protruding ring 3122 can guide and limit the forward and backward movements of the first lens 320 and the second lens 330 respectively, so that the forward and backward movements the first lens 320 and the second lens 330 is smooth and reliable. Specifically, the avoidance portion is an opening (or notch) on the protruding ring.

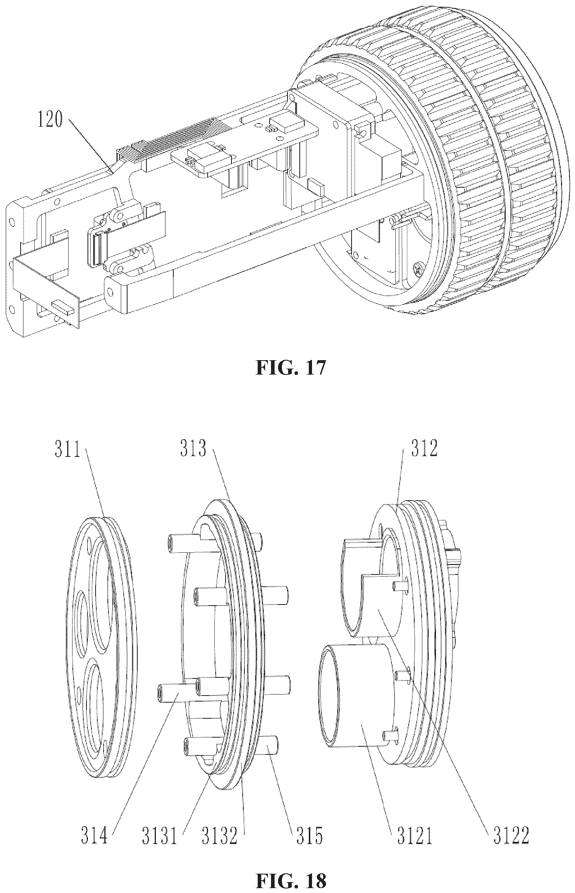

It can be understood that in some cases, the protruding ring may not be provided with the avoidance portion. Taking the first lens 320 as an example, when a threaded portion of the front end of the first lens 320 extends out of the first protruding ring 3121 in an assembled state, the threaded portion of the front end of the first lens 320 can be in contact and in threaded fit with the first focusing ring 340, thus the avoidance portion may not be provided. FIG. 18 shows a case where the first protruding ring 3121 is not provided with the avoidance portion while the second protruding ring 3122 is provided with the avoidance portion.

In addition, a sealing ring may be provided between the first protruding ring 3121 and the first lens 320 for sealing, and another sealing ring may be provided between the second protruding ring 3122 and the second lens 330 for sealing.

In some embodiments, the front flange 311 and the rear flange 312 are respectively detachably connected with the intermediate member 313. The detachable connection is convenient for assembly. Besides, through the connection between the front flange 311 and the intermediate member 313, and the connection between the rear flange 312 and the intermediate member 313, mounting spaces for mounting the first focusing ring 340 and the second focusing ring 350 are formed, to define an reliable axial limit can be realized.

In some embodiments, an end face of the intermediate member 313 facing the front flange 311 and/or an end face of the front flange 311 facing the intermediate member 313 is provided with a first limiting post 314. A distance between the front flange 311 and the intermediate member 313 is limited by the first limiting post 314. When the intermediate member 313 is fixed with the front flange 311, the distance between the intermediate member 313 and the front flange 311 is limited under an axial limiting effect of the first limiting post 314, so that the first focusing ring 340 can be effectively limited in the axial direction while being mounted. Specifically, the distance between the front flange 311 and the intermediate member 313 is limited by the first limiting post 314, to ensure that the front flange 311 and the intermediate member 313 are in clearance fit with the first focusing ring 340, which not only defines the axial limit of the first focusing ring 340 but also facilitates rotating the first focusing ring 340 during focusing.

In some embodiments, an end face of the intermediate member 313 facing the rear flange 312 and/or an end face of the rear flange 312 facing the intermediate member 313 is provided with a second limiting post 315. A distance between the rear flange 312 and the intermediate member 313 is limited by the second limiting post 315. When the intermediate member 313 is fixed with the rear flange 312, the distance between the intermediate member 313 and the rear flange 312 is limited under an axial limiting effect of the second limiting post 315, so that the second focusing ring 350 can be effectively limited in the axial direction while being mounted. Specifically, the distance between the rear flange 312 and the intermediate member 313 is limited by the second limiting post 315, to ensure that the rear flange 312 and the intermediate member 313 are in clearance fit with the second focusing ring 350, which not only realizes the axial limiting of the second focusing ring 350 but also facilitates rotating the second focusing ring 350 during focusing.

In some embodiments, the first limiting post 314 is provided with a screw hole, and the intermediate member 313 and the front flange 311 are connected through a screw. The second limiting post 315 is provided with a screw hole, and the intermediate member 313 with the rear flange 312 are connected through a screw. The first limiting post 314 is used not only for axial limiting but also for connecting the intermediate member 313 with the front flange 311, and different functions are integrated, which further simplifies the structure. Taking the case that the first limiting post 314 is arranged on the intermediate member 313 as an example, the front flange 311 is provided with a through hole at a position corresponding to the first limiting post 314, and the screw passes through the through hole to be fastened with the screw hole in the first limiting post 314, with a head end of the screw being stuck at the front end of the front flange 311, thus fixing the intermediate member 313 with the front flange 311. The arrangement of the second limiting post 315 is similar to the arrangement of the first limiting post 314, which will not be described here. The number of the first limiting post 314 and the number of the second limiting post 315 may be set as required, preferably, at least two first limiting post 314 are provided along the circumferential direction and at least two the second limiting post 315 are provided along the circumferential direction, so as to realize axial limiting and locking from different directions.

In some embodiments, the first limiting post 314 and the second limiting post 315 are symmetrically arranged on two end faces of the intermediate member 313. The first limiting post 314 and the second limiting post 315 are symmetrically arranged with respect to the intermediate member 313, so that stresses on both ends of the intermediate member 313 are more balanced, and thus the overall structure is more stable and reliable.

Further, the first limiting post 314 communicates with the screw hole on the second limiting post 315, and the front flange 311 and the rear flange 312 are connected with each other by the screws to press the intermediate member 313. The screw passes through the screw hole, where a tail end of the screw is locked with one of the front flange 311 and the rear flange 312, and the head end of the screw is stuck outside the other of the front flange 311 and the rear flange 312, such that the screw fixedly connects the front flange 311 and the rear flange 312, and the intermediate member 313 is pressed between the front flange 311 and the rear flange 312 to realize the fixation of the front flange 311, the intermediate member 313 and the rear flange 312. With the above arrangement, fewer screws are needed during assembly, which simplifies the operation.

In some embodiments, the intermediate member 313 includes a main body portion 3131 and a flange 3132 formed by a middle part of the outer peripheral surface of the main body portion 3131 protruding radially outward. The parts of the main body portion 3131 at a front end and a rear end of the flange 3132 are respectively used for the first focusing ring 340 and the second focusing ring 350 to sleeve on. A front end face and a rear end face of the flange 3132 are used for abutting against the rear end face of the first focusing ring 340 and the front end face of the second focusing ring 350, respectively; and/or, a front end face and a rear end face of the main body portion 3131 are used for abutting against the rear end face of the first focusing ring 340 and the front end face of the second focusing ring 350, respectively. With flange 3132, the first focusing ring 340 and the second focusing ring 350 can be completely separated from each other, and the first focusing ring 340 and the second focusing ring 350 can be separately limited in the axial direction, resulting in a simpler structure and enabling quick positioning during assembly. Specifically, sealing rings are provided between the parts of the main body portion 3131 located at the front end and the rear end of the flange 3132 and the first focusing ring 340 and the second focusing ring 350, respectively.

Specifically, the inner wall of the first focusing ring 340 is provided with a first focusing boss 3401, which may be annular in shape. A front end face of the first focusing boss 3401 is used to abut against a limiting face on the front flange 311 for axial limiting, and a rear end face of the first focusing boss 3401 is used to abut against the front end face of the main body portion 3131 for axial limiting. Correspondingly, the inner wall of the second focusing ring 350 is provided with a second focusing boss 3501, which may be annular in shape. A front end face of the second focusing boss 3501 is used to abut against the rear end face of the main body portion 3131 for axial limiting, and a rear end face of the second focusing boss 3501 is used to abut against a limiting face on the rear flange 312 for axial limiting. In some embodiments, the supporting main body 310 is provided with a fill light position for mounting a fill light 360. The fill light position is provided to facilitate mounting of the fill light and ensure the accurate mounting position. The specific location of the fill light position on the supporting main body 310 may be set according to the internal space of the monocular handheld device, which is not specifically limited here. With the fill light 360 arranged on the supporting main body 310, the use scenarios are further expanded. In a case that the supporting main body 310 includes the front flange 311, the rear flange 312 and the intermediate member 313, the fill light 360 is arranged at one end of the rear flange 312 where the first lens 320 and the second lens 330 are provided.

In some embodiments, a front end face of one of the first focusing ring 340 and the second focusing ring 350 that is located at the front end of the objective lens assembly 300 protrudes from the front end faces of the first lens 320, the second lens 330 and the fill light 360 in the axial direction. That is, an axial projection of the front end face of the one of the first focusing ring 340 and the second focusing ring 350 that is located at the front end of the objective lens assembly 300 is in front of axial projections of the first lens 320, the second lens 330 and the fill light 360. Taking the first focusing ring 340 being located at the front end of the objective lens assembly 300 as an example, the first focusing ring 340 is located at an end of the objective lens assembly 300 that is away from the user's eyes relative to the second focusing ring 350 when the objective lens assembly 300 is in use, and the first lens 320, the second lens 330 and the fill light 360 are all nested in the first focusing ring 340 instead of protruding from the lens barrel. The first lens 320, the second lens 330 and the fill light 360 being arranged in the same lens barrel allowing the appearance cleaner and more beautiful and the structure simple and compact. In other embodiments, the first lens 320, the second lens 330 and the fill light 360 may protrude from or be flush with the one of the first focusing ring 340 and the second focusing ring 350 located at the front end of the objective lens assembly 300 in the axial direction as required.

In some embodiments, the fill light 360 includes an LED fill light or a laser fill light. An ordinary LED fill light has low cost, and due to its different light-emitting principle compared with laser fill lights, LED fill lights can be applied in areas or environments where laser fill lights are prohibited by the legal requirements for safety. By contrast, the laser fill light has a small size and a long range, and under the same power, the laser fill light can provide a better supplementary lighting effect.

In some embodiments, the fill light 360 is a fixed-focus fill light or a zoom fill light. When the fill light 360 is a fixed-focus fill light, it can be fixedly connected to the supporting main body 310, such as being screwed to the rear flange 312. With the above arrangement, the mounting is simple and the cost is low, and the type of the fill light 360 is more suitable for LED lamp beads.

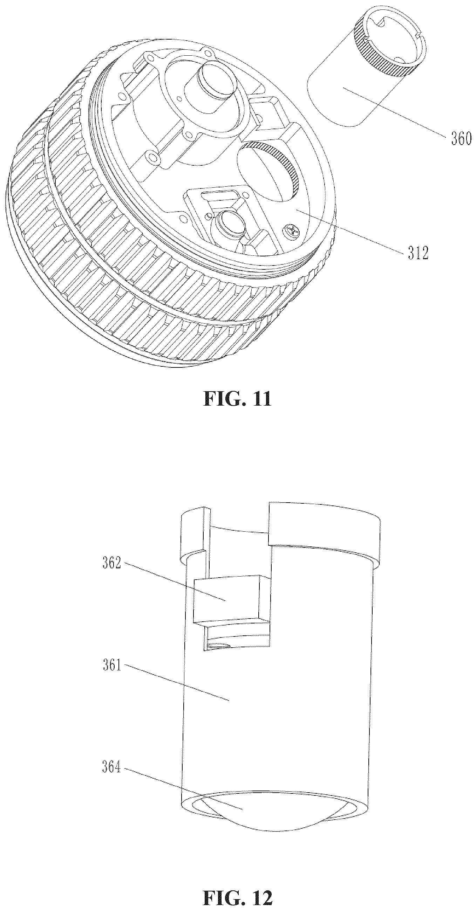

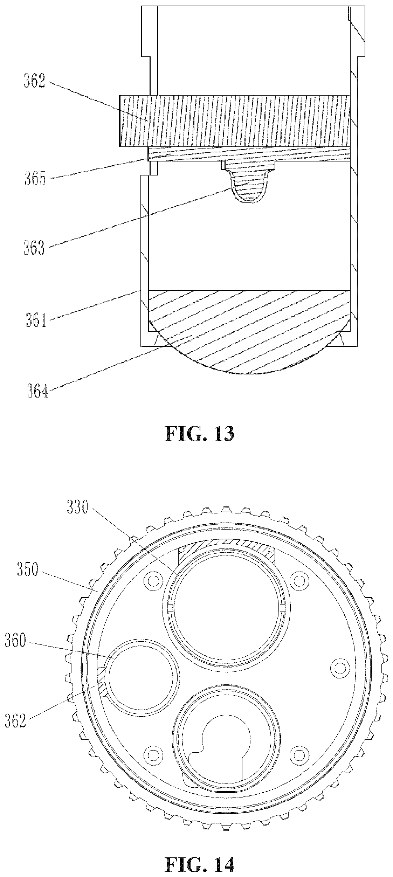

In some embodiments, the fill light 360 is a zoom fill light. With reference to FIG. 11 to FIG. 14, the zoom fill light includes a fill light housing 361, a fill light adjuster 362, a light body 363 and a lens 364. The fill light housing 361 is arranged on the supporting main body 310, and specifically on the rear flange 312. The lens 364 is arranged at one end of the fill light housing 361, the light body 363 is arranged at the fill light adjuster 362, and the fill light adjuster 362 is arranged at the other end of the fill light housing 361 in an axially slidable manner, to adjust the focal length of the light body 363. When it is necessary to adjust the zoom fill light, the fill light adjuster 362 moves along the axial direction, thus changing the distance between the light body 363 and the lens 364, and realizing zooming to better adapt to different use environments. Specifically, the light body 363 is arranged on a base plate 365, and the base plate 365 is arranged on the fill light adjuster 362.

In some embodiments, one of the first lens 320 and the second lens 330 is an infrared lens and the other is a low-light lens. The focusing ring in cooperation with the low-light lens cooperates with the fill light adjuster 362, to drive the low-light lens and the fill light adjuster 362 to slide in the axial direction. For example, taking the second lens 330 as a low-light lens, the second focusing ring in cooperation it also cooperates with the fill light adjuster 362, to drive the low-light lens and the fill light adjuster 362 to slide in the axial direction. The zoom fill light can adjust the distance between the light body 363 and the lens 364 by rotating the second focusing ring, in a manner similar to the focusing of the second lens 330. With the above arrangement, the effect of the fill light can always be exerted when viewing the nearby and distant targets in a low-light mode. This mode is particularly suitable for the laser fill light. Due to a long range and high brightness of the laser fill light, when the focal length of the fill light is set for long-distance observation, the spotlight effect is good; however, when viewing nearby targets, it is easy to have overexposure, which affects the observation. Specifically, the fill light adjuster 362 is provided with an external thread engaged with the internal thread of the second focusing ring. When the second focusing ring is rotated, the fill light adjuster 362 is driven to move in the axial direction, to change the distance between the light body 363 and the lens 364, so as to realize zooming, and realize focusing of the low-light lens at the same time. In order to enable the spotlighting distance of the zoom fill light to be matched with the observation distance of the lens, it is necessary to control that when observing the farthest or nearest place, the fill light illuminates the farthest and nearest places of night vision. The low-light lens may be specifically a starlight night vision lens or a low-light night vision lens, which can better meet the imaging requirements in the dark environment.

In some embodiments, with reference to FIG. 3 and FIG. 4, the end of the supporting main body 310 away from the body assembly 100 is provided with a flexible protection ring 390. That is, the front end of the objective lens assembly 300 is provided with the flexible protection ring 390 for providing protection when the whole device accidentally falls down. The flexible protection ring 390 may be made of plastic, silicone or other materials.

Further, as shown in FIG. 2, the supporting main body 310 is provided with an infrared detection position 370 for mounting an infrared detector and/or a low-light detection position 380 for mounting a low-light detector. The infrared detector and the low-light detector provide functions of infrared detection and low-light detection respectively. In the case that the supporting main body 310 includes the front flange 311, the rear flange 312 and the intermediate member 313, the infrared detection position 370 and/or the low-light detection position 380 may be provided on the rear flange 312. Specifically, the first lens 320 and the second lens 330 are arranged at one end of the rear flange 312, and the infrared detection position 370 and/or the low-light detection position 380 are provided at the other end of the rear flange 312, and the one end and the other end are opposite to each other in the axial direction.

A monocular handheld device is further provided according to the present application, which includes the objective lens assembly of any one of the above embodiments. As the monocular handheld device adopts the objective lens assembly in the above embodiments, the beneficial effects of the monocular handheld device may be referred to the above embodiments.

A monocular handheld device is further provided according to the present application. In an embodiment, with reference to FIG. 1 to FIG. 4 and FIG. 15 to FIG. 16, the monocular handheld device includes a body assembly 100, an eyepiece assembly 200 and an objective lens assembly 300. The body assembly 100 is a main holding part of the monocular handheld device, on which various functional buttons can be provided, and a circuit board and a battery of the monocular handheld device can be arranged inside the body assembly 100. The eyepiece assembly 200 is arranged at a rear end of the body assembly 100, and its specific structure may be referred to the conventional monocular handheld device, which will not be described here. It can be understood that the rear end refers to the end close to the user's eyes when the monocular handheld device is in use, and correspondingly, the front end is the end away from the user's eyes. The objective lens assembly 300 is arranged at the front end of the body assembly 100. The objective lens assembly 300 includes a supporting main body 310, a first lens 320, a second lens 330, a first focusing ring 340 and a second focusing ring 350. The supporting main body 310 is arranged at the body assembly 100 and is configured for mounting the first lens 320, the second lens 330, the first focusing ring 340 and the second focusing ring 350, and its specific structure is set according to mounting demands. The first lens 320 and the second lens 330 are arranged on the supporting main body 310 in such a way that they can move forward and backward along their respective optical axes, to change the distances between the lens surfaces of the first lens 320 and the second lens 330 and the target surfaces of their respective detectors, so as to realize focal length adjustment for clear imaging. Specifically, the optical axes of the first lens 320 and the second lens 330 are parallel to each other. The first lens 320 and the second lens 330 can realize multi-light fusion, including but not limited to infrared lenses and low-light lenses, such as a combination of the infrared lens and the starlight night vision lens. The first focusing ring 340 and the second focusing ring 350 are rotatably arranged on the supporting main body 310 and are restricted from moving axially by the supporting main body 310, that is, both of the first focusing ring 340 and the second focusing ring 350 can rotate relative to the supporting main body 310, but cannot move axially. The first focusing ring 340 is threadedly connected to the first lens 320, and the rotation of the first focusing ring 340 is converted into linear movement of the first lens 320 through threaded fit, so as to realize the focal length adjustment. The second focusing ring 350 is threadedly connected to the second lens 330, and the rotation of the second focusing ring 350 is converted into linear movement of the second lens 330 through threaded fit, so as to realize the focal length adjustment. Thus, independent focusing of first lens 320 and the second lens 330 is achieved. In the case that the first lens 320 and the second lens 330 are of different types, synchronous focusing cannot achieve clear imaging for both lenses simultaneously because of the difference in their imaging principles. Compared with synchronous focusing of the two lenses, independent focusing has broader applicability in the field of multi-light fusion. In addition, the rotation axis of the first focusing ring 340 is coaxial with the rotation axis of the second focusing ring 350. It should be noted that the rotation axis of the first focusing ring 340 refers to a rotation axis about which the first focusing ring 340 rotates relative to the supporting main body 310, and correspondingly, the rotation axis of the second focusing ring 350 refers to a rotation axis about which the second focusing ring 350 rotates relative to the supporting main body 310. The above arrangement facilitates the layout of the first focusing ring 340 and the second focusing ring 350.

With the monocular handheld device according to the present application, the first lens 320 and the second lens 330 are threadedly connected to the first focusing ring 340 and the second focusing ring 350 respectively, and the first focusing ring 340 and the second focusing ring 350 are restricted from axial movement on the supporting main body 310. The first lens 320 and the second lens 330 can be driven to move forward and backward by screwing the first focusing ring 340 and the second focusing ring 350, respectively, so as to change the distances between the lens surfaces of the first lens 320 and the second lens 330 and the target surfaces of the corresponding detectors, respectively to achieve clear imaging. That is, the monocular handheld device can realize the individual focal length adjustment of each lens. The rotation axes of the first focusing ring 340 and the second focusing ring 350 are coaxial with each other, resulting in a simple and compact structure, and making the operation convenient, thereby realizing quick focusing of the first lens 320 and the second lens 330, which enhances the ability of the discovery, focusing and observation of the monocular handheld device, and improves the user experience. Moreover, the objective lens assembly 300 has compact structure, high integrity and strong modularity, which is convenient for product upgrading in a later stage.

In some embodiments, the monocular handheld device further includes a laser ranging module and/or a laser indicating module, and the fill light position provided on the supporting main body 310 is used for detachably mounting one of the fill light 360, the laser ranging module and the laser indicating module. In this way, the user can selectively mount one of the fill light 360, the laser ranging module and the laser indicating module at the fill light position according to the usage demands. The fill light 360, the laser ranging module or the laser indicating module mounted at the fill light position can be removed for replacement under different shooting requirements. With the above arrangement, the usage scenarios of the monocular handheld device are more diversified. The specific structures of the laser ranging module and the laser indicating module may be referred to the conventional elements that can realize laser ranging and elements that can emit laser for indication.

Specifically, the structure of the objective lens assembly in the monocular handheld device may refer to any of the embodiments of the objective lens assembly.

In some embodiments, with reference to FIG. 17, the body assembly 100 includes a bracket 120 and a housing 110 covering the bracket 120. The bracket 120 is connected to the supporting main body 310, and the circuit board of the monocular handheld device is arranged on the bracket 120. By providing the bracket 120 and disposing the circuit board on the bracket 120, when assembling, the bracket 120 is connected to the supporting main body 310 first, and then the housing 110 is sleeved outside the bracket 120. In the case that the supporting main body 310 includes the front flange 311, the rear flange 312 and the intermediate member 313, the bracket 120 is connected to the rear flange 312. Compared with the case where the circuit board is arranged at the housing 110, by providing the bracket 120 separated from the housing 110 and disposing the circuit board on the bracket 120, the internal structure is simple and compact, and it is convenient for software debugging of the device and simple for later maintenance. Specifically, detachable connections like bolt connections are used between the bracket 120 and the supporting main body 310, and between the housing 110 and the bracket 120, which facilitates disassembly and later maintenance.

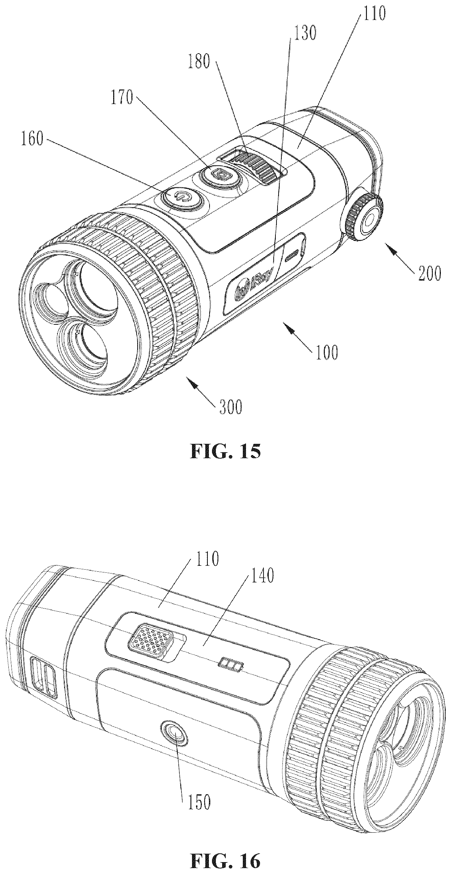

In some embodiments, with reference to FIG. 15 and FIG. 16, a battery compartment 140 and a heat dissipation component 130 are arranged on two opposite sides of the outer peripheral surface of the body assembly 100, respectively. Specifically, the heat dissipation component 130 is arranged on the left side of the body assembly 100, so that most right-handed users can avoid heat dissipation area when holding it with their right hands, thus reducing the strange feeling caused by the heat of the product and enhancing the comfort of holding. The heat dissipation component 130 includes, but not limited to, a heat dissipation plate for dissipating heat from a main chip. Correspondingly, the battery compartment 140 is arranged on the right side of the body assembly 100, and the battery compartment 140 is used for detachably mounting a battery, that is, the battery of the monocular handheld device can be replaced to increase battery life.

Specifically, the heat dissipation component 130 integrates an external Type-C port for charging and data transmission. A universal 1/4 port 150 may be provided at a bottom of the housing 110 corresponding to the center of gravity, which is convenient for later expansion, such as supporting the use with tripods and grips. A rotary encoder assembly 180, an on/off button 160 and a camera button 170 may be provided on an upper portion of the body assembly 100, which conforms to ergonomics and makes it comfortable to grip. The overall structure has a regular shape, which is convenient for single-handed holding for a long time.

In the present application, the left side describe above refers to the left side of the body assembly 100 viewed from the rear end to the front end in the usage state of the monocular handheld device, that is, viewing from the end of the monocular handheld device close to the user to the end away from the user. It can be understood that the rotary encoder assembly 180, the on/off button 160 and the camera button 170 are facing upward in the usage state of the monocular handheld device.

In some embodiments, at least the left side portion of the body assembly 100 is made of a lightweight plastic material, and a skin-friendly soft rubber material is used in the grip areas such as the upper portion and lower portion of the body assembly 100, to reduce the weight of the whole device.

The embodiments in the specification are described in a progressive manner, and each embodiment focuses on the difference from other embodiments. Same and similar parts in each embodiment may be referred to each other.

According to the above description of the disclosed embodiments, those skilled in the art can implement or practice the present application. Various modifications to these embodiments are obvious to those skilled in the art, and the general principles defined herein may be implemented in other embodiments without departing from the scope of the present application. Therefore, the present application is not limited to the embodiments described herein, but should be in accordance with the broadest scope consistent with the principle and novel features disclosed herein.

## Claims

1. An objective lens assembly (300), comprising a first lens (320), a second lens (330), a first focusing ring (340) and a second focusing ring (350), wherein
an optical axis of the first lens (320) and an optical axis of the second lens (330) are parallel to each other, and the first lens (320) and the second lens (330) are movable forward and backward along the respective optical axis;
the first focusing ring (340) and the second focusing ring (350) are coaxial and are sleeved outside the first lens (320) and the second lens (330) in sequence along an axial direction, and the first focusing ring (340) and the second focusing ring (350) are rotatable around the axial direction respectively; and
the first focusing ring (340) is configured to rotate around the axial direction to drive the first lens (320) to move forward and backward, to realize independent focusing of the first lens (320); and the second focusing ring (350) is configured to rotate around the axial direction to drive the second lens (330) to move forward and backward, to realize independent focusing of the second lens (330).

2. The objective lens assembly (300) according to claim 1, wherein
the first focusing ring (340) is threadedly connected to the first lens (320), the first focusing ring (340) is configured to rotate around the axial direction, to drive the first lens (320) to move forward and backward; and
the second focusing ring (350) is threadedly connected to the second lens (330), the second focusing ring (350) is configured to rotate around the axial direction, to drive the second lens (330) to move forward and backward.

3. The objective lens assembly (300) according to claim 2, wherein
the first focusing ring (340) is sleeved outside the first lens (320) and the second lens (330), an outer wall of the first lens (320) is provided with a first external thread (321), and an inner wall of the first focusing ring (340) is provided with a first internal thread (341) engaged with the first external thread (321); and/or
the second focusing ring (350) is sleeved outside the first lens (320) and the second lens (330), an outer wall of the second lens (330) is provided with a second external thread (331), and an inner wall of the second focusing ring (350) is provided with a second internal thread engaged with the second external thread (331).

4. The objective lens assembly (300) according to claim 1, wherein
one of an outer wall of the first lens (320) and an inner wall of the first focusing ring (340) is provided with a first slide groove (322), the other is provided with a first protrusion (342) fitted with the first slide groove (322), and the first protrusion (342) is configured to move along the first slide groove (322) when the first focusing ring (340) rotates around the axial direction, to drive the first lens (320) to move forward and backward; and/or
one of an outer wall of the second lens (330) and an inner wall of the second focusing ring (350) is provided with a second slide groove, the other is provided with a second protrusion fitted with the second slide groove, and the second protrusion is configured to move along the second slide groove when the second focusing ring (350) rotates around the axial direction, to drive the second lens (330) to move forward and backward.

5. The objective lens assembly (300) according to claim 4, wherein
in a case that the first slide groove (322) and the first protrusion (342) are provided, the outer wall of the first lens (320) is provided with a first boss (323), an outer peripheral surface of the first boss (323) is coaxial with the inner wall of the first focusing ring (340), and the first slide groove (322) is provided in the outer peripheral surface of the first boss (323); and
in a case that the second slide groove and the second protrusion are provided, the outer wall of the second lens (330) is provided with a second boss, an outer peripheral surface of the second boss is coaxial with the inner wall of the second focusing ring (350), and the second slide groove is provided in the outer peripheral surface of the second boss.

6. The objective lens assembly (300) according to claim 5, wherein
in a case that the first boss (323) is provided, the outer peripheral surface of the first boss (323) is further provided with a first avoidance groove (324) extending along the axial direction, wherein the first avoidance groove (324) has one end being communicated with the first slide groove (322) and the other end extending to an edge of the first boss (323), to allow the first protrusion (342) to be inserted into the first slide groove (322) via the first avoidance groove (324); and
in a case that the second boss is provided, the outer peripheral surface of the second boss is further provided with a second avoidance groove extending along the axial direction, wherein the second avoidance groove has one end being communicated with the second slide groove and the other end extending to an edge of the second boss, to allow the second protrusion to be inserted into the second slide groove via the second avoidance groove.

7. The objective lens assembly (300) according to any one of claims 1 to 6, further comprising a supporting main body (310), wherein the first lens (320) and the second lens (330) are arranged on the supporting main body (310) and are movable forward and backward along their respective optical axis; the first focusing ring (340) and the second focusing ring (350) are sleeved on an outer periphery of the supporting main body (310) in sequence along the axial direction, and the first focusing ring (340) and the second focusing ring (350) are rotatable relative to the supporting main body (310) respectively and are restricted from axial movement by the supporting main body (310).

8. The objective lens assembly (300) according to claim 7, further comprising a fill light (360) arranged on the supporting main body (310).

9. The objective lens assembly (300) according to any one of claims 1 to 6, wherein an outer peripheral surface of the first focusing ring (340) and an outer peripheral surface of the second focusing ring (350) are each provided with an anti-slip soft rubber pad.

10. The objective lens assembly (300) according to any one of claims 1 to 6, wherein the first lens (320) is an infrared lens, and the second lens (330) is a low-light lens; or, the first lens (320) is a low-light lens, and the second lens (330) is an infrared lens.

11. The objective lens assembly (300) according to claim 7, wherein the supporting main body (310) comprises a front flange (311), an intermediate member (313) and a rear flange (312) arranged in the listed sequence along the axial direction; the first focusing ring (340) and the second focusing ring (350) are rotatably connected to a front end and a rear end of the intermediate member (313), respectively, the first focusing ring (340) is sandwiched between the front flange (311) and the intermediate member (313) to be axially limited, and the second focusing ring (350) is sandwiched between the rear flange (312) and the intermediate member (313) to be axially limited.

12. The objective lens assembly (300) according to claim 11, wherein a rear end face of the front flange (311) faces a front end edge of the first lens (320) and a front end edge of the second lens (330), and a front end face of the rear flange (312) faces a rear end edge of the first lens (320) and a rear end edge of the second lens (330), to allow the first lens (320) to abut against the front flange (311) or the rear flange (312) during axial movement, to be axially limited, and allow the second lens (330) to abut against the front flange (311) or the rear flange (312) during axial movement, to be axially limited.

13. The objective lens assembly (300) according to claim 11, wherein the first lens (320) and the second lens (330) are both arranged on the rear flange (312).

14. A monocular handheld device, comprising the objective lens assembly (300) according to any one of claims 1 to 13.

15. The monocular handheld device according to claim 14, further comprising a body assembly (100) and an eyepiece assembly (200), wherein the eyepiece assembly (200) is arranged at a rear end of the body assembly (100), and the objective lens assembly (300) is arranged at a front end of the body assembly (100).
